# EUROPEAN PATENT APPLICATION

(11) **EP 2 447 741 A1**
(43) Date of publication of application: **02.05.2012**
(21) Application number: 10014993.9
(22) Date of filing: 25.11.2010
(51) Int. Cl.: G02B 3/14, G02B 26/02, G02B 27/22, H04N 13/00

(54) **Optical system for displaying three-dimensional images and associated method**

(30) Priority: 31.10.2010 US 916602
(71) Applicant: Silicon Touch Technology, Inc., Hsin-Chu (TW)
(72) Inventor: Biring, Sajal, Hsinchu City (TW)
(74) Representative: Görz, Ingo

(57) **Abstract**

An optical system for displaying 3D images includes a pixel array having a plurality of pixel elements, a lens module and a control unit. The lens module has a plurality of tunable lens elements and is disposed on the pixel array, where each tunable lens element has a light incident surface that faces a pixel element of the pixel array, and receives light emitted from the pixel element. The control unit is coupled to the lens module, and is utilized for controlling focal lengths of the tunable lens elements.

## Description

The present invention relates to an optical system for displaying three-dimensional (3D) images and associated method according to the pre-characterizing clauses of claims 1 and 5.

3D displays have become very popular because they form 3D images in front of a viewer giving the feeling of a real environment. At present, a number of technologies have been invented to display 3D images; these technologies can be categorized broadly into two types: stereoscopic display and auto-stereoscopic display.

In stereoscopic display, a viewer needs to wear special glasses (such as shutter glasses) in order to visualize the 3D images, which becomes impractical for many applications such as outdoor display. An auto-stereoscopic display system allows the viewer to watch 3D images without wearing any special glasses. There are few technologies which are able to form auto-stereoscopic images, however, as most of the display systems are designed in such a way that a viewer must be at some specific point with respect to the screen, which is a limited design.

This in mind, the present invention aims at providing an optical system for displaying three-dimensional (3D) images and associated method to solve the above-mentioned problems.

This is achieved by an optical system according to claim 1 and a method according to claim 5. The dependent claims pertain to corresponding further developments and improvements.

As will be seen more clearly from the detailed description following below, an optical system for displaying 3D images comprises a pixel array having a plurality of pixel elements, a lens module and a control unit. The lens module has a plurality of tunable lens elements and is disposed on the pixel array, where each of the tunable lens elements has a light incident surface facing towards a pixel element of the pixel array, and receives light emitted from the pixel element. The control unit is coupled to the lens module, and is utilized for controlling focal lengths of the tunable lens elements.

As will be seen more clearly from the detailed description following below, a method for displaying 3D images comprises: providing a pixel array having a plurality of pixel elements; providing a lens module having a plurality of tunable lens elements and disposed on the pixel array, where each tunable lens element has a light incident surface that faces a pixel element of the pixel array, and receives light emitted from the pixel element; and controlling focal lengths of the tunable lens elements.

In the following, the invention is further illustrated by way of example, taking reference to the accompanying drawings. Thereof
FIG. 1 is a diagram illustrating an optical system for displaying 3D images according to one embodiment of the present invention.
FIG. 2 is a diagram illustrating how the optical system generates 3D images.
FIG. 3 is a flowchart of a method for displaying 3D images according to one embodiment of the present invention.

Certain terms are used throughout the following description and the claims to refer to particular system components. As one skilled in the art will appreciate, manufacturers may refer to a component by different names. This document does not intend to distinguish between components that differ in name but not function. In the following discussion and in the claims, the terms "include", "including", "comprise", and "comprising" are used in an open-ended fashion, and thus should be interpreted to mean "including, but not limited to ..." The terms "couple" and "coupled" are intended to mean either an indirect or a direct electrical connection. Thus, if a first device couples to a second device, that connection may be through a direct electrical connection, or through an indirect electrical connection via other devices and connections.

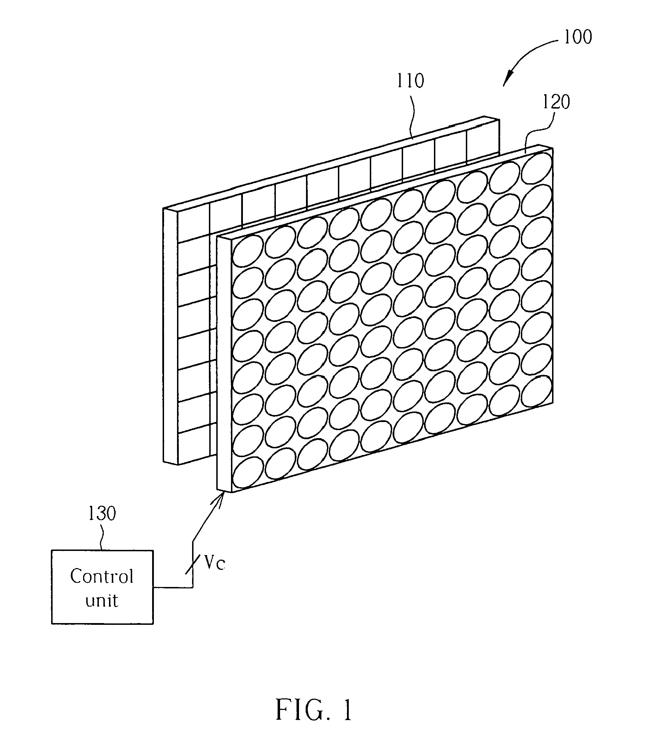

Please refer to FIG. 1. FIG. 1 is a diagram illustrating an optical system 100 for displaying 3D images according to one embodiment of the present invention. As shown in FIG. 1, the optical system 100 includes a pixel array 110, a lens module (in this embodiment, a liquid crystal (LC) lens module 1 20 serves as the lens module) and a control unit 130. The pixel array 110 includes a plurality of pixel elements, where each of the pixel elements can be an R/G/B pixel of a color filter or light-emitting diode, or any other pixel element which emits light to the LC lens module 120. The LC lens module 120 has a plurality of tunable lens elements (in this embodiment, a plurality of LC lenses serve as the tunable lens elements) and is disposed on the pixel array 110, where each LC lens has a light incident surface that faces a pixel element of the pixel array 110, and receives light emitted from the pixel element. In addition, the LC lens module 120 can be adhered closely to the pixel array 110, or be disposed on the pixel array 1 10 wherein the tunable lens elements are spaced at a certain distance from each other, or disposed on the pixel array 110 wherein one or more other layer(s) is/are positioned between the pixel array 110 and the LC lens module 120. The control unit 130 is utilized for generating a plurality of control signals Vc to control focal lengths of the LC lenses of the LC lens module 120, respectively, where the plurality of control signals Vc are determined according to depth information of image data to be displayed on the optical system 100.

In addition, in this embodiment, each LC lens is disposed on a pixel element of the pixel array 110, and is controlled by one of the control signals Vc.

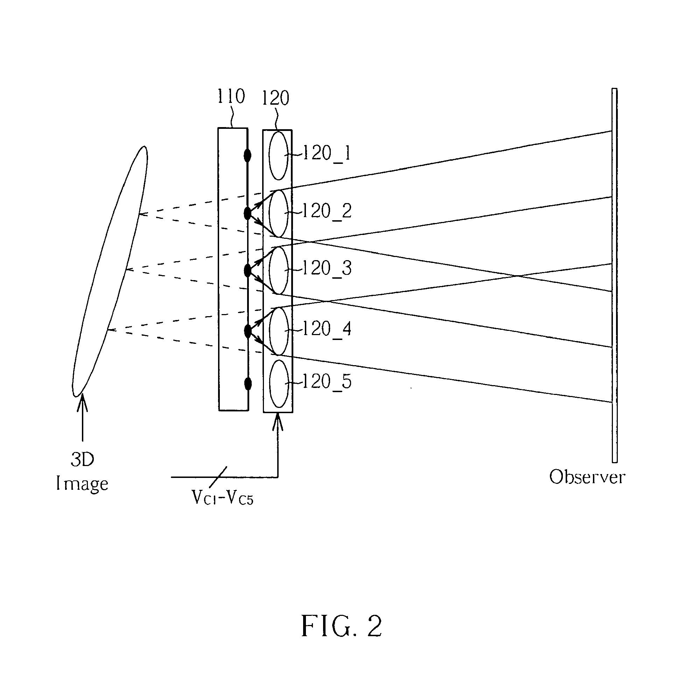

Please refer to FIG. 2. FIG. 2 is a diagram illustrating how the optical system 100 generates 3D images. As shown in FIG. 2, the control unit 130 generates control signals Vc1 -Vc5 to control the LC lenses 120_1-120_5, respectively, where Vc1 > Vc2 > Vc3 > Vc4 > Vc5 in voltage levels. Because the focal length of the LC lens has a negative correlation with its corresponding applied voltage, the focal lengths of the LC lenses 120_1-1 20_5 are shown in FIG. 2 which the LC lens 120_1 has a shortest focal length and the LC lens 120_5 has a greatest focal length. Therefore, an observer will feel that the image has different depths; that is the observer will have the sensation of viewing a 3D image.

In the optical system 100, the observer can watch 3D images without wearing any optical device such as shutter glasses. Furthermore, the observer does not need to be at some specific point, and instead can stand anywhere in front of the LC lens module 120 while still able to view the 3D image.

It is noted that, because the control signals Vc are determined according to depth information of image data to be displayed on the optical system 100 at a current time point, voltage levels of the control signals Vc (or a portion of the control signals Vc) will change when the frame changes.

In addition, although the LC lens module 120 serves as the lens module in this embodiment, it is not meant to be a limitation of the present invention. In other embodiments, other type of lens module having tunable lens elements can be used to replace the LC lens module 120. This alternative design also falls within the scope of the present invention.

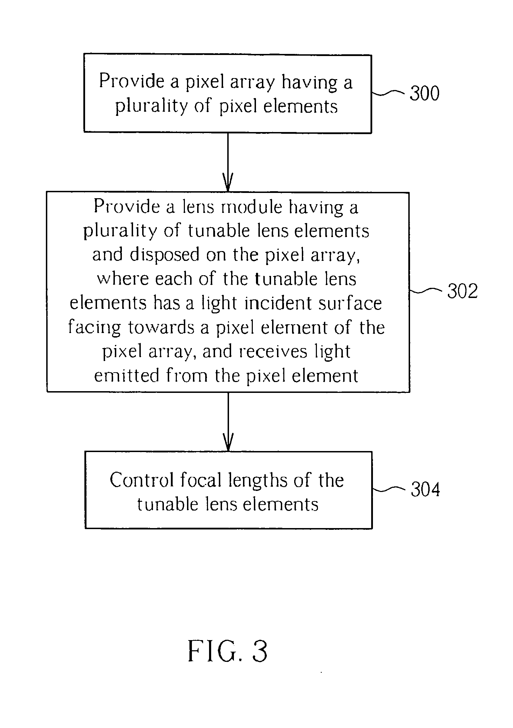

Please refer to FIG. 3. FIG. 3 is a flowchart of a method for displaying 3D images according to one embodiment of the present invention. Referring to FIG. 3, the flow is described as follows:
Step 300: provide a pixel array having a plurality of pixel elements.
Step 302: provide a lens module having a plurality of tunable lens elements and disposed on the pixel array, where each of the tunable lens elements has a light incident surface that faces a pixel element of the pixel array, and receives light emitted from the pixel element.
Step 304: control focal lengths of the tunable lens elements.

Briefly summarized, in the optical system for displaying 3D images and the associated method of the present invention, a lens module having a plurality of tunable lens elements is disposed on a pixel array, where the focal lengths of the tunable lens elements can be controlled by control signals determined according to depth information of image data to be displayed on the optical system. Therefore, the observer can have the freedom to position themselves anywhere in front of the lens module to watch the 3D image.

All combinations and sub-combinations of above-described features also belong to the invention.

## Claims

1. An optical system (100) for displaying three-dimensional (3D) images, comprising:
a pixel array having a plurality of pixel elements (110);
**characterized by**:
a lens module (120), having a plurality of tunable lens elements (120_1-120_5) and disposed on the pixel array, wherein each tunable lens element has a light incident surface that faces a pixel element of the pixel array (1 10), and receives light emitted from the pixel element; and
a control unit (130), coupled to the lens module (120), for controlling
focal lengths of the tunable lens elements (120_1-120_5).

2. The optical system of claim 1 , **characterized in that** the control unit (1 30) utilizes a plurality of control signals (Vc) to control the focal lengths of the plurality of tunable lens elements (120_1-120_5), respectively, and the plurality of control signals (Vc) are determined according to depth information of image data to be displayed on the optical system (100).

3. The optical system of claim 1 or 2, **characterized in that** the lens module (120) is a liquid crystal (LC) lens module and each of the tunable lens elements is an LC lens.

4. The optical system of any one of claims 1 to 3, **characterized in that** the pixel array (1 10) is a light-emitting diode (LED) pixel array.

5. A method for displaying three-dimensional (3D) images, comprising:
providing a pixel array having a plurality of pixel elements;
**characterized by**:
providing a lens module having a plurality of tunable lens elements
and disposed on the pixel array, where each tunable lens element has a light incident surface that faces a pixel element of the pixel array, and receives light emitted from the pixel element; and controlling focal lengths of the tunable lens elements.

6. The method of claim 5, **characterized in that** the step of controlling the focal lengths of the tunable lens elements comprises:
utilizing a plurality of control signals to control the focal lengths of
the plurality of tunable lens elements, respectively, where the plurality of control signals are determined according to depth information of image data to be displayed on the optical system.

7. The method of claim 5 or 6, **characterized in that** the lens module is a liquid crystal (LC) lens module and each of the tunable lens elements is an LC lens.

8. The method of any one of claims 5 to 7, **characterized in that** the pixel array is a light-emitting diode (LED) pixel array.
